# EUROPEAN PATENT APPLICATION

(11) **EP 4 382 260 A1**
(43) Date of publication of application: **12.06.2024**
(21) Application number: 22853157.0
(22) Date of filing: 04.08.2022
(51) Int. Cl.: B25J 9/10, B25J 13/08, B25J 19/04, G05B 19/19

(54) **ROBOT CONTROL DEVICE, ROBOT CONTROL SYSTEM, AND ROBOT CONTROL METHOD**

(30) Priority: 04.08.2021 JP 2021128491
(71) Applicant: Kyocera Corporation, Kyoto-shi Kyoto 612-8501 (JP)
(72) Inventor: GRACIA, Fidelia, Kyoto-shi, Kyoto 612-8501 (JP); ISHIDA, Takayuki, Kyoto-shi, Kyoto 612-8501 (JP); MORI, Masato, Kyoto-shi, Kyoto 612-8501 (JP); UCHITAKE, Masahiro, Kyoto-shi, Kyoto 612-8501 (JP)
(74) Representative: TBK
(86) International application number: PCT/JP2022/030010
(87) International publication number: WO 2023/013739

(57) **Abstract**

A robot control device includes a controller. The controller executes a first calibration of a robot in at least one first calibration position included in a first calibration range set in an operating space of the robot and executes a second calibration of the robot in at least one second calibration position that is included in a second calibration range defining part of the first calibration range and that is set with a higher density than the at least one first calibration position.

## Description

### CROSS-REFERENCE TO RELATED APPLICATIONS

This application claims priority of Japanese Patent Application No. 2021-128491 (filed August 4, 2021), the entire contents of which are incorporated herein for reference.

### TECHNICAL FIELD

The present disclosure relates to a robot control device, a robot control system, and a robot control method.

### BACKGROUND OF INVENTION

In a known robot vision system, a calibration operation can be automatically performed without needing extra time and effort (see, for example, Patent Literature 1).

### CITATION LIST

### PATENT LITERATURE

Patent Literature 1: Japanese Unexamined Patent Application Publication No. 2010-172986

### SUMMARY

An embodiment of the present disclosure, a robot control device includes a controller configured to control a robot. The controller executes a first calibration of the robot in at least one first calibration position included in a first calibration range set in an operating space of the robot. The controller executes a second calibration of the robot in at least one second calibration position. The at least one second calibration position is included in a second calibration range defining part of the first calibration range and is set with a higher density than the at least one first calibration position.

According to an embodiment of the present disclosure, a robot control system includes the above-described robot control device and robot.

According to an embodiment of the present disclosure, a robot control method includes executing, by a controller configured to control a robot, a first calibration of the robot in at least one first calibration position included in a first calibration range set in an operating space of the robot. The robot control method includes executing, by the controller, a second calibration of the robot in at least one second calibration position that is included in a second calibration range defining part of the first calibration range and that is set with a higher density than the at least one first calibration position.

### BRIEF DESCRIPTION OF THE DRAWINGS

FIG. 1 is a block diagram illustrating an example of configuration of a robot control system according to an embodiment.
FIG. 2 is a schematic view illustrating the example of configuration of the robot control system according to the embodiment.
FIG. 3 is a schematic view illustrating an example of a calibration range.
FIG. 4 is a flowchart representing an example of procedures for executing a first calibration in a robot control method according to an embodiment.
FIG. 5 is a flowchart representing an example of procedures for executing a second calibration in the robot control method according to the embodiment.

### DESCRIPTION OF EMBODIMENTS

Reducing the time taken for a calibration operation is demanded in robot work. The time taken for the calibration operation can be reduced with a robot control device, a robot control system, and a robot control method according to embodiments of the present disclosure.

### (Outline of Robot Control System 1)

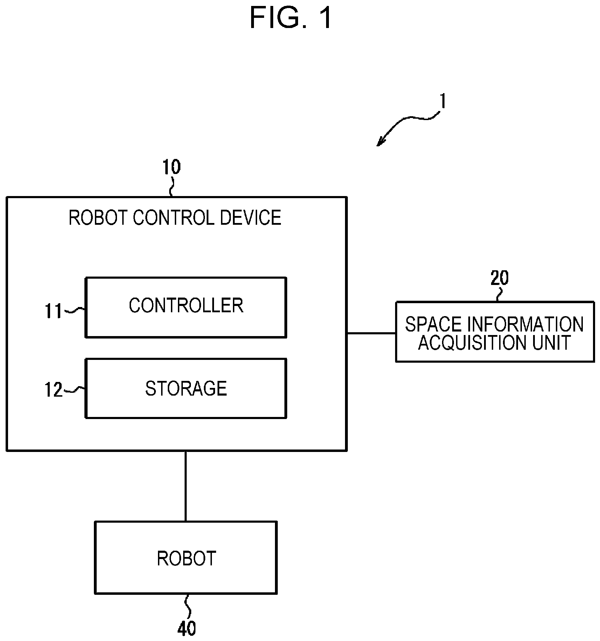

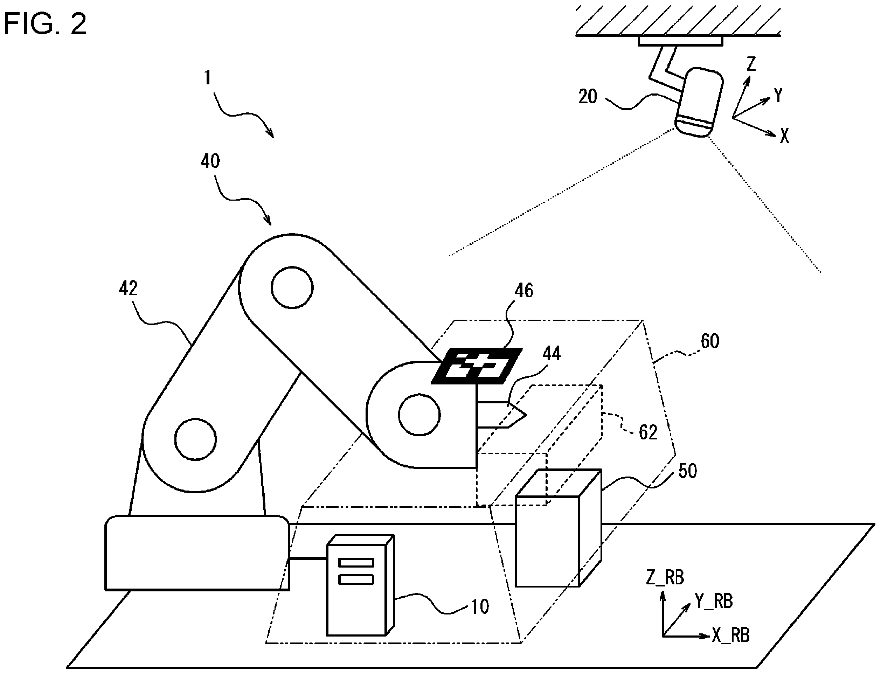

According to the embodiment, as illustrated in FIGs. 1 and 2, the robot control system 1 includes a robot 40, a robot control device 10, and a space information acquisition unit 20. The robot 40 operates in a predetermined operating space. The space information acquisition unit 20 generates depth information of the operating space in which the robot 40 operates. As described later, the space information acquisition unit 20 calculates a distance to a measurement point positioned on a surface of an object 50 that is present in the operating space. The distance from the space information acquisition unit 20 to the measurement point is also referred to as a "depth". The depth information indicates the depth measured for each measurement point. In other words, the depth information indicates the distance to the measurement point positioned on the surface of the object 50 present in the operating space. The depth information may be expressed as a depth map in which a direction looking from the space information acquisition unit 20 and the depth in that direction are linked with each other. The space information acquisition unit 20 generates the depth information of the operating space on the basis of an (X, Y, Z) coordinate system. The robot control device 10 operates the robot 40 in accordance with the depth information generated by the space information acquisition unit 20. The robot control device 10 operates the robot 40 on the basis of an (X_RB, Y_RB, Z_RB) coordinate system.

The (X_RB, Y_RB, Z_RB) coordinate system is also referred to as a coordinate system of the robot 40. The (X, Y, Z) coordinate system is also referred to as a coordinate system of the space information acquisition unit 20. The coordinate system of the robot 40 may be set as the same or a different coordinate system as or from that of the space information acquisition unit 20. When the coordinate system of the robot 40 is set as a coordinate system different from that of the space information acquisition unit 20, the robot control device 10 uses the depth information generated on the basis of the coordinate system of the space information acquisition unit 20 after transformation into the coordinate system of the robot 40.

The number of the robots 40 and the number of the robot control devices 10 are each not limited to one as in the illustrated example and may be two or more. The number of the space information acquisition units 20 may be one for each operating space as in the illustrated example or may be two or more. Individual components will be described in detail below.

### <Robot Control Device 10>

The robot control device 10 includes a controller 11 and a storage 12.

The controller 11 may include at least one processor to realize various functions of the robot control device 10. The processor can execute programs for realizing the various functions of the robot control device 10. The processor may be implemented as a single integrated circuit. The integrated circuit is also referred to as an "IC". The processor may be implemented as multiple integrated circuits and discrete circuits that are connected to be capable of communicating with one another. The processor may include a CPU (Central Processing Unit). The processor may include a DSP (Digital Signal Processor) or a GPU (Graphics Processing Unit). The processor may be implemented based on other various known techniques.

The storage 12 may include an electromagnetic storage medium such as a magnetic disk, or a memory such as a semiconductor memory or a magnetic memory. The storage 12 may be constituted as an HDD (Hard Disk Drive) or an SSD (Solid State Drive). The storage 12 stores various types of information, programs executed in the controller 11, and so on. The storage 12 may function as a work memory for the controller 11. The controller 11 may include at least part of the storage 12.

The robot control device 10 may further include a communication device capable of communicating with the space information acquisition unit 20 and the robot 40 by wire or wirelessly. The communication device may be constituted to be capable of performing communication in accordance with suitable one of communication methods based on various communication standards. The communication device can be constituted by using known communication techniques. Detailed description of hardware and so on of the communication device is omitted. Functions of the communication device may be realized with one interface or separate interfaces that are different per connection destination. The controller 11 may be constituted to be capable of communicating with the space information acquisition unit 20 and the robot 40. The controller 11 may include the communication device.

### <Robot 40>

As illustrated in FIG. 2, the robot 40 includes an arm 42, an end effector 44 mounted to the arm 42, and a mark 46 attached to the end effector 44. The mark 46 may be attached to the arm 42 instead of the end effector 44.

The arm 42 may be constituted as a 6- or 7-axis vertical articulated robot. The arm 42 may be constituted as a 3- or 4-axis horizontal articulated robot or a scalar robot. The arm 42 may be constituted as a 2- or 3-axis orthogonal robot. The arm 42 may be constituted as a parallel link robot or the like. The number of axes constituting the arm 42 is not limited to the numbers mentioned above as examples.

The end effector 44 may include, for example, a grip hand capable of gripping a work target. The grip hand may have multiple fingers. The number of the fingers of the grip hand may be two or more. The fingers of the grip hand may each include one or more joints. The end effector 44 may include an attraction hand capable of attracting the work target. The end effector 44 may include a scoop band capable of scooping the work target. The end effector 44 may include a tool, such as a drill, to be capable of performing various types of working, such as drilling to form a hole in the work target. The end effector 44 is not limited to the above-mentioned examples and may be constituted to be capable of performing various other operations.

The robot 40 can control a position of the end effector 44 by operating the arm 42. The end effector 44 may have an axis as a reference for a direction of action on the work target. When the end effector 44 has the axis, the robot 40 can control a direction of the axis of the end effector 44 by operating the arm 42. The robot 40 controls the start and the end of an operation performed by the end effector 44 to act on the work target. The robot 40 can move the work target or make working on the work target by controlling the operation of the end effector 44 while controlling the position of the end effector 44 or the direction of the axis of the end effector 44.

The robot 40 may further include sensors for detecting states of the components of the robot 40. The sensors may detect information regarding actual positions or postures of the components of the robot 40 or speeds or accelerations of the components of the robot 40. The sensors may detect forces acting on the components of the robot 40. The sensors may detect currents flowing in motors for driving the components of the robot 40 or torques of the motors. The sensors can detect information that is provided as results of actual operations of the robot 40. The robot control device 10 can recognize the results of the actual operations of the robot 40 by obtaining the detection results of the sensors. In other words, the robot control device 10 can obtain a state of the robot 40 based on the detection results of the sensors.

The robot control device 10 recognizes, based on an image of the mark 46 captured by the space information acquisition unit 20, the position of the mark 46 or the position of the end effector 44 to which the mark 46 is attached. The robot control device 10 further recognizes the state of the robot 40 based on the image of the mark 46 captured by the space information acquisition unit 20. The robot control device 10 can execute a calibration of the robot 40 by comparing the state of the robot 40 obtained based on the detection results of the sensors and the state of the robot 40 obtained based on the captured image of the mark 46.

### <Space Information Acquisition Unit 20>

The space information acquisition unit 20 obtains space information regarding the operating space of the robot 40. The space information acquisition unit 20 may capture an image of the operating space and may obtain, as the space information, the image of the operating space. The space information acquisition unit 20 may capture an image of the object 50 present in the operating space as illustrated in FIG. 2. The space information acquisition unit 20 may be constituted as a camera. A 3D stereo camera captures an image of the object 50 present in the operating space, calculates the distance to the measurement point, as the depth, which is positioned on the surface of the object 50 present in the operating space, and generates the depth information. The space information acquisition unit 20 may be constituted as the 3D stereo camera. The space information acquisition unit 20 may be constituted as a LiDAR (light detection and ranging) sensor. The LiDAR sensor measures the distance to the measurement point positioned on the surface of the object 50 present in the operating space and generates the depth information. In other words, the space information acquisition unit 20 may obtain, as the space information, the depth information of the operating space. The space information acquisition unit 20 is not limited to the above-mentioned examples and may be constituted as suitable one of various other devices. The space information acquisition unit 20 may obtain, as the space information, various other types of information without being limited to the image of the operating space or the depth information. The space information acquisition unit 20 may include an image capturing element. The space information acquisition unit 20 may further include an optical system. The space information acquisition unit 20 may output the captured image of the operating space to the robot control device 10. The space information acquisition unit 20 may generate the depth information in the operating space of the robot 40 and may output the generated depth information to the robot control device 10. The space information acquisition unit 20 may generate point cloud information in the operating space of the robot 40 and may output the generated point cloud information to the robot control device 10. Thus, the space information acquisition unit 20 may output the space information in the form of point cloud data. Stated another way, the point cloud information may include the space information. The point cloud information represents a set of individual measurement points positioned on the surface of the object 50 present in the operating space and includes coordinate information or color information for each of the measurement points. The point cloud information can also be said as data representing the object 50 in a measurement space by using multiple points. With the space information being in the form of point cloud data, a data density can be made smaller than when the space information is based on initial data obtained by the space information acquisition unit 20.

The space information acquisition unit 20 has an FOV (Field of View). The FOV corresponds to an image capturing range of the space information acquisition unit 20. The space information acquisition unit 20 can capture an image of a range included in the FOV. An actual visual field size of the space information acquisition unit 20 is determined based on the FOV of the space information acquisition unit 20 and the depth information. The robot control device 10 can obtain a position and a posture of the mark 46 on the robot 40 based on both the actual visual field size of the space information acquisition unit 20 and the image that is captured by the space information acquisition unit 20 and that includes the mark 46 on the robot 40. More specifically, by analyzing the captured image of the mark 46 according to a predetermined algorithm, the robot control device 10 can calculate the position and the posture of the mark 46 based on the image. The predetermined algorithm may include, for example, a mathematical formula, a table, or the like and/or a program specifying predetermined arithmetic processing. The predetermined algorithm may include a parameter for correcting a result calculated based on the image.

### (Operation Examples of Robot Control Device 10)

The robot control device 10 operates the robot 40 to act on the work target, such as the object 50 present in the operating space, or operates the robot 40 to move while avoiding the object 50. The robot control device 10 operates the robot 40 to act on the work target or to move while avoiding the object 50 based on the image of the object 50 captured by the space information acquisition unit 20.

### <Calibration>

The controller 11 of the robot control device 10 can obtain the state of the robot 40 based on the position and the posture of the mark 46 in the image captured by the space information acquisition unit 20 and can further obtain a positional relationship between the robot 40 and the object 50. On the other hand, the controller 11 also obtains the state of the robot 40 with sensors on the robot 40, such as encoders attached to the arm 42 and so on. The state of the robot 40 based on the detection by the sensors represents the position and the posture of the robot 40 with higher accuracy than the state of the robot 40 based on the image captured by the space information acquisition unit 20. Accordingly, the controller 11 can control the robot 40 in the operating space with higher accuracy by making the state of the robot 40 based on the image captured by the space information acquisition unit 20 agree with the state of the robot 40 based on the detection by the sensors on the robot 40. An operation of making the state of the robot 40 based on the image captured by the space information acquisition unit 20 agree with the state of the robot 40 based on the detection by the sensors on the robot 40 is also referred to as a "calibration". More specifically, the controller 11 executes the calibration such that the (X, Y, Z) coordinate system of the space information acquisition unit 20 agrees with the (X_RB, Y_RB, Z_RB) coordinate system of the robot 40. The controller 11 may estimate a relative positional relationship between the coordinate system of the space information acquisition unit 20 and the coordinate system of the robot 40 and may make the coordinate system of the space information acquisition unit 20 agree with the coordinate system of the robot 40 based on the estimated relative positional relationship.

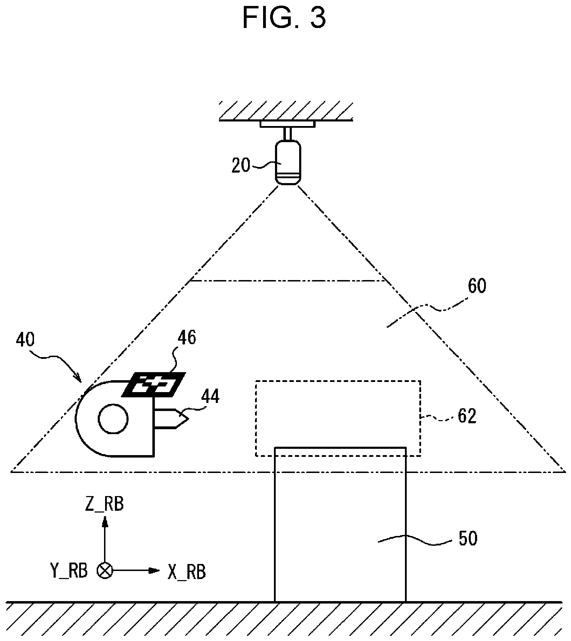

The controller 11 may execute the calibration by setting at least part of the FOV of the space information acquisition unit 20 as a calibration range. In this embodiment, the controller 11 executes the calibration in each of a first calibration range 60 and a second calibration range 62 illustrated in FIGs. 2 and 3. The first calibration range 60 includes the second calibration range 62. In other words, the second calibration range 62 corresponds to part of the first calibration range 60. The first calibration range 60 is denoted as a region surrounded by two-dot-chain lines in FIGs. 2 and 3. The second calibration range 62 is denoted as a region surrounded by dashed lines in FIGs. 2 and 3. The first calibration range 60 and the second calibration range 62 are each referred to simply as a "calibration range" when there is no necessity of distinguishing those two calibration ranges. The calibration range corresponds to a range in which the calibration of the robot 40 is executed. The calibration range may include a work region of the robot 40. The calibration range may be a range in which the work region of the robot 40 and the FOV overlap.

Furthermore, the controller 11 sets a point for execution of the calibration in the calibration range. The point for execution of the calibration is also referred to as a "calibration position". The calibration position set in the first calibration range 60 is also referred to as a "first calibration position". The calibration position set in the second calibration range 62 is also referred to as a "second calibration position". The second calibration position is set to a position different from the first calibration position.

The controller 11 moves the mark 46 on the robot 40 to the calibration position and instructs the space information acquisition unit 20 to capture the image of the mark 46. The controller 11 calculates the position and the posture of the mark 46 based on the captured image of the mark 46. The controller 11 corrects the position and the posture of the mark 46, calculated based on the image, such that the position and the posture of the mark 46 based on the image agree with the position and the posture of the mark 46 determined based on the detection results of the sensors on the robot 40. The correction of the position and the posture of the mark 46 based on the image corresponds to the calibration. The position and the posture of the mark 46 is also referred to as "tip position and posture". The calibration corresponds to the correction of the tip position and posture. The calibration position corresponds to a position where the tip position and posture is corrected.

In more detail, the controller 11 may execute the calibration as described below. The controller 11 generates control information of the robot 40 for moving the mark 46 on the robot 40 to the calibration position. The controller 11 operates the robot 40 in accordance with the control information and moves the mark 46 on the robot 40 to the calibration position. The controller 11 obtains the captured image of the mark 46 from the space information acquisition unit 20. The controller 11 calculates the position and the posture of the mark 46 based on the image. The position and the posture of the mark 46 calculated based on the image is also referred to as "image-based tip position and posture". The controller 11 calculates the position and the posture of the mark 46 determined based on the detection results of the sensors on the robot 40. The position and the posture of the mark 46 calculated based on the detection results of the sensors are also referred to as "sensor-based tip position and posture". The controller 11 compares the image-based tip position and posture and the sensor-based tip position and posture. The controller 11 corrects the image-based tip position and posture such that the image-based tip position and posture agree with the sensor-based tip position and posture. The controller 11 may correct an algorithm for calculating the image-based tip position and posture. The controller 11 may correct a parameter included in the algorithm or may correct a mathematic formula, a table, or a program. When multiple calibration positions are set, the controller 11 moves the robot 40 to each of the calibration positions, obtains the captured image of the mark 46 in each calibration position, and corrects the image-based tip position and posture.

While, in the above-described example, the calibration is executed on the position and posture of the mark 46, a target on which the calibration is to be executed is not limited to the position and the posture of the mark 46. In other words, the controller 11 may previously store a positional relationship between the position of the mark 46 and a position of the calibration target, given by part of the robot 40, on which the calibration is to be executed, and may calculate the position and the posture of the calibration target from the position and the posture of the mark 46 based on the image. Then, the calibration can be executed by comparing the calculated position and posture of the calibration target with the position and the posture of the calibration target based on the detection results of the sensors on the robot 40. Thus, the calibration can also be executed on the target other than the position and the posture of the mark 46. Moreover, while the calibration target is the tip position and posture of the robot 40 in the above-described example, the calibration target is not limited to the tip position and posture of the robot 40 insofar as the position and the posture of the target can be calculated.

### «Calibration Item»

The controller 11 previously sets the calibration range prior to executing the calibration. Furthermore, the controller 11 sets the calibration position that is included in the calibration range. The controller 11 sets at least one first calibration position within the first calibration range 60. The controller 11 sets at least one second calibration position within the second calibration range 62. The controller 11 sets the calibration position such that a density of the second calibration position is higher than that of the first calibration position. Stated another way, the controller 11 sets the second calibration position with a higher density than the first calibration position. Conversely speaking, the controller 11 sets the first calibration position with a lower density than the second calibration position. The number of the second calibration positions may be equal to or greater than that of the first calibration positions.

The controller 11 generates the control information of the robot 40 for causing the robot 40 to move to the calibration position. The controller 11 generates, as calibration items, information specifying the tip position and posture and a recognition result of the mark 46 on the robot 40 after movement of the robot 40. Calibration items specifying the tip position and posture and the recognition result of the mark 46 on the robot 40 when the robot 40 has been moved to at least one first calibration position included in the first calibration range 60, set in the operating space of the robot 40, are also referred to as "first calibration items". Calibration items specifying the tip position and posture and the recognition result of the mark 46 on the robot 40 when the robot 40 has been moved to at least one second calibration position included in the second calibration range 62, set in the operating space of the robot 40, are also referred to as "second calibration items". The calibration items are each information regarding, for example, coordinates. More specifically, the calibration item is, for example, coordinate information indicating the tip position and posture based on the detection results of the sensors on the robot 40 or coordinate information indicating the tip position and posture based on the recognition result of the mark 46 recognized by the space information acquisition unit 20 when the robot 40 has been moved to the calibration position.

The controller 11 may generate the calibration items as described below.

The controller 11 obtains, for example, information regarding the actual visual field size of the space information acquisition unit 20 or information regarding the FOV from the space information acquisition unit 20. The controller 11 sets the calibration range based on both the actual visual field size or the FOV of the space information acquisition unit 20 and the work region of the robot 40. The controller 11 may set the calibration range based on a position of the object 50 in the operating space of the robot 40. The controller 11 may set the calibration range based on the depth information or the point cloud information of the object 50, that information being detected by the space information acquisition unit 20. Furthermore, the controller 11 may set, for example, the first calibration range 60 based on the actual visual field size and the FOV. The controller 11 may set, for example, the second calibration range 62 based on the work region. The calibration range may include multiple second calibration ranges 62. When the controller 11 instructs the robot 40 to perform a pick-and-place operation, for example, the controller 11 may set, as the work region, the second calibration range 62 for each of a place where the robot 40 grips the target and a place where the target is placed. In FIGs. 2 and 3, a shape of the first calibration range 60 is set to a truncated square pyramid. A shape of the second calibration range 62 is set to a rectangular parallelepiped. The shape of the calibration range is not limited to the above-mentioned examples and may be set to suitable one of various other shapes.

The controller 11 makes the sensor-based tip position and posture of the robot 40 and the image-based tip position and posture captured by the space information acquisition unit 20 agree with each other. In more detail, the controller 11 moves the robot 40 to a first position. The controller 11 moves the robot 40 to the first position by generating control information for operating the robot 40 and moving the mark 46 on the robot 40 to a predetermined position and posture and by controlling the robot 40 in accordance with the control information. The first position may be a predetermined position included in the FOV of the space information acquisition unit 20. The first position may be, for example, a center position of the FOV of the space information acquisition unit 20. The controller 11 obtains an image of the mark 46 when the robot 40 has been moved to the first position and calculates the position and the posture of the mark 46 as the image-based tip position and posture. Furthermore, the controller 11 calculates the sensor-based tip position and posture. By comparing the image-based tip position and posture and the sensor-based tip position and posture, the controller 11 corrects the control information of the robot 40 such that the position of the robot 40 becomes the first position, determined based on the detection results of the sensors, within the image. By moving the robot 40 in accordance with the corrected control information, the controller 11 updates the state of the robot 40 such that the position of the robot 40 in the coordinate system of the robot 40 and the position of the robot 40 in the coordinate system of the space information acquisition unit 20 agree with each other. Stated another way, the controller 11 updates the state of the robot 40 such that the position of the robot 40 becomes the same as the first position within the image.

The controller 11 may generate at least one position that is a candidate for the calibration position within the calibration range. The at least one position as the candidate for the calibration position is also referred to as "at least one second position". The controller 11 may set the first position as one of the at least one second position. The controller 11 may set the at least one second position in a position different from the first position. The controller 11 may select the first calibration position and the second calibration position from the first position or the at least one second position that are set in each of the first calibration range 60 and the second calibration range 62. The at least one second position may include a point positioned at a corner or a side of the calibration range. Alternatively, the at least one second position may include a point positioned within the calibration range. By simulating an operation of the robot 40, the controller 11 estimates the state of the robot 40 when the robot 40 has been moved to the second position. Thus, the controller 11 calculates the state of the robot 40 on an assumption that the robot 40 is moved to the second position. Stated another way, the controller 11 estimates the state of the robot 40 on an assumption that the robot 40 is moved to the first calibration position or the second calibration position. As a result, the controller 11 can determine whether the robot 40 can be moved to the second position represented by, for example, the first calibration position and the second calibration position.

As described later, the first calibration is a calibration that is executed in the first calibration position and that is executed in a simpler fashion in each of positions set with a lower density (positions set with a wider interval). Accordingly, the controller 11 can correct the robot 40 with less operation by executing the first calibration. The second calibration is a calibration that is executed in the second calibration position and that is executed in a finer fashion in each of positions set with a higher density (positions set with a narrower interval). Accordingly, the controller 11 can correct the operation of the robot 40 with high accuracy by executing the second calibration.

The controller 11 registers the second position as the calibration position if the state of the robot 40 on an assumption of the robot 40 being moved to the second position is a state of not being in contact with the object 50, a state of being within a joint movable range, and a state of not being at a singularity. When the controller 11 registers the second position as the calibration position, the controller 11 generates, as multiple calibration items, information specifying the tip position and posture based on the detection results of the sensors on the robot 40 and the tip position and posture based on the recognition result of the mark 46 on the robot 40 when the robot 40 has been moved to the second position. When the controller 11 does not register the second position as the calibration position, the controller 11 may generate a new different second position and may determine whether the new second position can be registered as the calibration position. When a numerical value representing a joint angle of the robot 40 is within the joint movable range, the controller 11 may determine that the robot 40 is in a state free from restriction on the joint. When the numerical value representing the joint angle of the robot 40 is outside the joint movable range, the controller 11 may determine that the robot 40 is in a state under restriction on the joint.

The singularity corresponds to a posture in which the robot 40 can no longer be controlled from the structural viewpoint of the robot 40. When a path along which the robot 40 is to be operated includes the singularity, the robot 40 moves (runs away out of control) at a high speed near the singularity and then stops at the singularity. The robot 40 has three types (1) to (3) of singularities as follows:
(1) A point outside the work region when the robot 40 is controlled to move up to a position near an outer side limit of the work region. (The work region corresponds to the operating space of the robot 40).
(2) A point at which the robot 40 is controlled toward a position right above or below a robot base even with the point positioned within the work region.
(3) A point (wrist aligned singularity) at which an angle of a next joint from a frontmost joint of the arm 42 of the robot 40 is zero or 180 degrees.

When a numerical value representing the state of the robot 40 agrees with a numerical value representing the state of being at the singularity, the controller 11 may determine that the robot 40 is in the singularity state. When a difference between the numerical value representing the state of the robot 40 and the numerical value representing the state of being at the singularity is less than a predetermined value, the controller 11 may determine that the robot 40 is in the singularity state. The numerical value representing the state of the robot 40 may include, for example, the joint angle of the arm 42 or the torque of the motor for driving the robot 40.

As described above, the controller 11 sets the calibration range and sets the calibration position within the calibration range. The controller 11 can generate the calibration item as the information specifying the tip position and posture of the robot 40 when the robot 40 has been moved to the calibration position.

### <<Execution of Calibration>>

The controller 11 executes the calibration such that the calibration item for the tip position and posture derived from the recognition result of the mark 46 agrees with the calibration item for the tip position and posture derived from the detection results of the sensors on the robot 40. In more detail, the controller 11 moves the robot 40 to the calibration position. The controller 11 obtains, from the space information acquisition unit 20, the recognition result of the mark 46 on the robot 40 when the robot 40 has been moved to the calibration position. The controller 11 calculates the relative positional relationship of the calibration item for the tip position and posture obtained as the recognition result of the mark 46 relative to the calibration item for the sensor-based tip position and posture of the robot 40. The relative positional relationship corresponds to differences in coordinates and angle between both the calibration items. The controller 11 corrects the coordinate system of the space information acquisition unit 20 to make it agree with the coordinate system of the robot 40 such that an error in the coordinates and an error in the angle corresponding to the relative positional relationship between both the calibration items come to zero or close to zero (namely, that the error becomes less than a predetermined value). Thus, the controller 11 can calculate the relative positional relationship by making the recognition result of the mark 46 agree with the tip position and posture specified by the sensors on the robot 40 when the robot 40 has been moved to the calibration position. Alternatively, the controller 11 may make the tip position and posture specified by the sensors on the robot 40 agree with the tip position and posture recognized as the recognition result of the mark 46.

The controller 11 can set the calibration position by generating one or more calibration items. Conversely speaking, the calibration position corresponds to a position to which the robot 40 is moved to generate the calibration items. By applying the calibration position to the control of the robot 40, the controller 11 can move the robot 40 to the calibration position and can execute the calibration. The calibration to which the first calibration items are applied is also referred to as the "first calibration". The calibration to which the second calibration items are applied is also referred to as the "second calibration". The controller 11 can execute the first calibration by applying the first calibration position to the control of the robot 40 and by moving the robot 40 to the first calibration position. The controller 11 can execute the second calibration by applying the second calibration position to the control of the robot 40 and by moving the robot 40 to the second calibration position.

The controller 11 executes the first calibration and the second calibration. The controller 11 can correct the robot 40 with less operation by executing the first calibration. On the other hand, the controller 11 can correct the operation of the robot 40 with high accuracy by executing the second calibration. The first calibration is the calibration that is executed in the first calibration position and that is executed in a simpler fashion in each of the positions set with the lower density (the positions set with a wider interval). Accordingly, the controller 11 can correct the robot 40 with less operation by executing the first calibration. The second calibration is the calibration that is executed in the second calibration position and that is executed in a finer fashion in each of the positions set with the higher density (the positions set with the narrower interval). Accordingly, the controller 11 can correct the operation of the robot 40 with high accuracy by executing the second calibration.

The first calibration may be a calibration that is required regardless of the details of work to be performed by the robot 40. The second calibration may be a calibration that is required depending on the details of the work to be performed by the robot 40. In other words, the first calibration range 60 may be a constant range regardless of the details of the work to be performed by the robot 40, and the second calibration range 62 may be a range set in a different size depending on the details of the work to be performed by the robot 40.

The controller 11 executes the calibration prior to starting the work to be performed by the robot 40. The controller 11 may execute only the first calibration to be able to correct the robot 40 with accuracy at which the robot 40 can perform the work.

The controller 11 may execute the second calibration after executing the first calibration. The controller 11 may start the work by the robot 40 after executing the first calibration and may execute the second calibration during the work by the robot 40. In that case, the controller 11 generates the first calibration items in advance prior to starting the work by the robot 40. The controller 11 may generate the second calibration items in advance prior to starting the work by the robot 40 or during the work by the robot 40.

In more detail, the controller 11 starts the work by the robot 40 on the basis of the coordinate system that has been corrected by executing the first calibration. The controller 11 controls the position and the posture of the robot 40 to the position and the posture determined for the work. The controller 11 obtains the image-based tip position and posture by recognizing the mark 46 with the space information acquisition unit 20 when the robot 40 has been controlled to the position and the posture determined for the work. Furthermore, the controller 11 obtains, based on the detection results of the sensors on the robot 40, the sensor-based tip position and posture. The controller 11 can execute the calibration according to the image-based tip position and posture and the sensor-based tip position and posture.

The controller 11 may register, as the calibration position, the tip position and posture of the robot 40 when the robot 40 has been controlled to the position and the posture determined for the work. The controller 11 generates, as the second calibration items, calibration items specifying the calibration position and the recognition result of the mark 46 in the calibration position.

The controller 11 may generate the second calibration items such that the second calibration position has a higher density than the first calibration position. Conversely speaking, the controller 11 may generate the first calibration items depending on the density of the second calibration position, that density being determined based on the details of the work of the robot 40. In more detail, the controller 11 may set the first calibration position such that the density of the first calibration position applied to the first calibration to execute the first calibration prior to starting the work of the robot 40 is lower than that of the second calibration position. The calibration in the first calibration position is executed in a simpler fashion. The calibration in the second calibration position is executed in a finer fashion. Since the first calibration position is set such that the density of the first calibration position is lower than that of the second calibration position, the load of the first calibration executed in a simpler fashion can be reduced.

The controller 11 may set, in part of the operating space of the robot 40 in which the robot 40 performs the work, the second calibration position with a density that is determined based on accuracy of the work of the robot 40. This enables the second calibration position to be set with an appropriate density.

### (Example of Procedures of Robot Control Method)

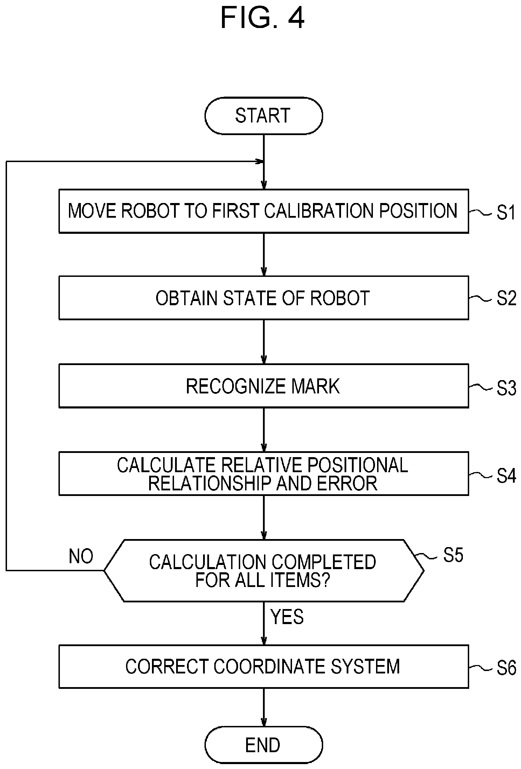

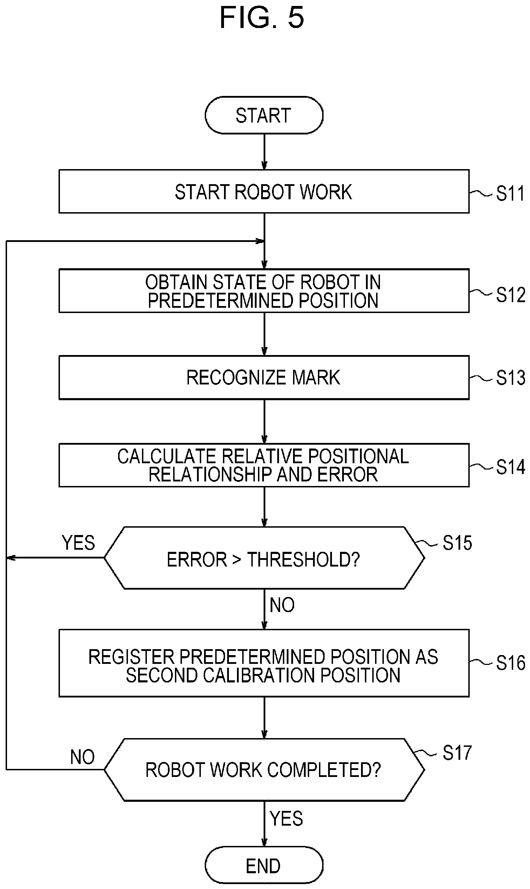

The controller 11 of the robot control device 10 may execute the robot control method including procedures of a flowchart illustrated in FIGs. 4 and 5. The robot control method may be implemented as a robot control program that is executed by a processor constituting the controller 11. The robot control program may be stored in a non-transitory computer-readable medium.

First, the controller 11 execute, as the first calibration, the procedures of the flowchart illustrated in FIG. 4. The controller 11 moves the robot 40 to the first calibration position (step S1). The controller 11 obtains, based on the detection results of the sensors, the state of the robot 40 in the first calibration position to which the robot 40 has been moved (step S2). The controller 11 obtains the recognition result of the mark 46 in the first calibration position to which the robot 40 has been moved (step S3).

The controller 11 calculates the relative positional relationship and the error when the robot 40 has been moved to the first calibration position (step S4). In more detail, the controller 11 obtains the image-based tip position and posture according to the recognition result of the mark 46 and further obtains the sensor-based tip position and posture according to the detection results of the sensors. The controller 11 calculates the relative positional relationship and the error between the image-based tip position and posture and the sensor-based tip position and posture. The controller 11 may calculate, as the error, an overall calibration error.

The controller 11 determines whether the calculation of the relative positional relationship and the error is completed for all the calibration items included in the first calibration items (step S5). If the calculation of the relative positional relationship and the error is not completed for all the calibration items (step S5: NO), the controller 11 returns to the procedure of step S1 and repeats the processing operation for the calibration item for which the calculation is not completed. If the calculation of the relative positional relationship and the error is completed for all the calibration items (step S5: YES), the controller 11 corrects the coordinate system based on the relative positional relationship and the error calculated for each of the calibration items (step S6). In more detail, the controller 11 corrects the coordinate system of the space information acquisition unit 20 to make it agree with the coordinate system of the robot 40. After executing the procedure of step S6, the controller 11 ends the execution of the procedures of the flowchart illustrated in FIG. 4.

Then, the controller 11 execute, as the second calibration, the procedures of the flowchart illustrated in FIG. 5. In an example of the procedures illustrated in FIG. 5, it is assumed that the second calibration items are not set in advance.

The controller 11 starts the work of the robot 40 (step S 11). The controller 11 obtains the state of the robot 40 in a predetermined position to which the robot 40 has been moved to perform the work (step S12). The controller 11 obtains the recognition result of the mark 46 in the predetermined position to which the robot 40 has been moved to perform the work (step S13). In steps S12 and S13, the predetermined position corresponds to the tip position and posture of the robot 40. The controller 11 may set, as the predetermined position, any of positions to which the robot 40 is moved to perform the work. The controller 11 may set, as the predetermined position, a position where the robot 40 is temporarily at rest during the work.

The controller 11 calculates the relative positional relationship and the error in the tip position and posture of the robot 40 in the predetermined position (step S14). The controller 11 determines whether the error is greater than a threshold (step S 15). More specifically, the controller 11 may calculate one evaluation value for a total of errors of the position and the posture and may compare the evaluation value and the threshold. In that case, it is assumed that, as the error increases, the evaluation value is calculated as a greater value. Alternatively, the controller 11 may compare the magnitude of the position error and the magnitude of the posture error with respective thresholds for the position and the posture. The threshold to be compared with the magnitude of the position error is also referred to as a "first threshold". The threshold to be compared with the magnitude of the posture error is also referred to as a "second threshold". If at least one of the following facts, namely the fact that the magnitude of the position error is greater than the first threshold and the fact that the magnitude of the posture error is greater than the second threshold, is satisfied, the controller 11 may determine that the error is greater than the threshold. If the magnitude of the position error is greater than the first threshold and the magnitude of the posture error is greater than the second threshold, the controller 11 may determine that the error is greater than the threshold.

If the error is not greater than the threshold (step S15: NO), namely if the error is equal to or smaller than the threshold, the controller 11 registers the predetermined position as the second calibration position (step S16). More specifically, the controller 11 may generate the second calibration items with the predetermined position set as the second calibration position and may store the generated second calibration items in the storage 12. On the other hand, if the error is greater than the threshold (step S15: YES), the controller 11 returns to the procedure of step S12 without registering the predetermined position as the second calibration position and repeats the operation of from step S12 to S16 in the next predetermined position.

The controller 11 determines whether the work of the robot 40 has been completed (step S17). If the work of the robot 40 is not completed (step S17: NO), the controller 11 returns to the procedure of step S12 and repeats the operation of from step S12 to S16 in the next predetermined position. If the work of the robot 40 has been completed (step S 17: YES), the controller 11 ends the execution of the procedures of the flowchart illustrated in FIG. 5.

### (Recapitulation)

As described above, with the robot control device 10 and the robot control method according to the embodiments, the first calibration and the second calibration are executed separately. Since the density of the first calibration position set in the first calibration is set to be lower than that of the second calibration position set in the second calibration, the load of the first calibration can be reduced. As a result, the time taken for the first calibration is reduced. Furthermore, the work of the robot 40 can be started after executing the first calibration. As a result, the time of the calibration operation taken for causing the robot 40 to perform the work can be reduced.

With the robot control device 10 and the robot control method according to the embodiments, the second calibration may be executed during a period in which the work of the robot 40 is performed. Furthermore, the second calibration may be executed in the range in which the robot 40 performs the work. Thus, the calibration can be executed efficiently. In addition, the calibration can be performed with high accuracy.

As described above, the relationship between the coordinate system of the space information acquisition unit 20 and the coordinate system of the robot 40 is specified by the calibration. In the embodiment, the coordinate system of the space information acquisition unit 20 and the coordinate system of the robot 40 agree with each other. The relationship between the coordinate systems may change due to various causes. The relationship between the coordinate systems may change when an abnormality occurs in the robot 40 or the robot control system 1. The relationship between the coordinate systems may change when the robot 40 is stopped or when the robot 40 is started up.

In the above case, when the robot 40 on which at least one calibration has been executed is ordinarily started up or when the robot 40 is started up to be recovered from the occurrence of an abnormality, the controller 11 may determine whether the relationship between the coordinate systems having been specified by the calibration is changed. If the relationship between the coordinate systems is not changed, the controller 11 does not need to execute the correction or the calibration of the relationship between the coordinate systems. On the other hand, if the relationship between the coordinate systems is changed at the startup of the robot 40, the controller 11 determines whether the relationship between the coordinate systems can be corrected. If the relationship between the coordinate systems can be corrected, the controller 11 corrects the relationship between the coordinate systems and does not execute the calibration. If the relationship between the coordinate systems cannot be corrected, the controller 11 may specify the relationship between the coordinate systems again by re-executing the first calibration and the second calibration.

Stated another way, the necessity of the first calibration and the second calibration may be determined when the robot 40 is stopped or when the robot 40 is started up. The stop of the robot 40 is not limited to an abnormal stop and may be regarded as indicating the completion of designated work. The startup of the robot 40 is not limited to the case of starting up the robot 40 after abnormal stop and may be regarded as indicating the start of designated work.

The second calibration may be executed each time the details of the work are changed. Furthermore, for the second calibration, whether the relationship between the coordinate systems having been specified by the calibration before that time is changed may be determined each time the details of the work are changed. If the relationship between the coordinate systems is not changed, the controller 11 does not need to execute the correction or the calibration of the relationship between the coordinate systems. On the other hand, if the relationship between the coordinate systems is changed at the startup of the robot 40, the controller 11 determines whether the relationship between the coordinate systems can be corrected. If the relationship between the coordinate systems can be corrected, the controller 11 corrects the relationship between the coordinate systems and does not execute the calibration. If the relationship between the coordinate systems cannot be corrected, the controller 11 may specify the relationship between the coordinate systems again by re-executing the second calibration. Only the second calibration may be executed as the calibration that is to be executed when the details of the work are changed.

In trying to determine whether the calibration is to be executed again, the controller 11 determines whether the relationship between the coordinate system of the robot 40 and the coordinate system of the space information acquisition unit 20 has been changed and further determines whether the recalibration is required, as described below.

The controller 11 moves the robot 40 to a measurement position. The controller 11 sets at least one measurement position to a point included in the calibration range. The measurement position may include, for example, any of the calibration positions. The measurement position may include, for example, a corner point of the calibration range. The measurement position may include, for example, the first position or the second position described above or a position different from the first position and the second position. The measurement position may include the calibration position used in the last calibration or a position different from the last calibration position. The controller 11 may set, for example, a point within the calibration range as the measurement position. The controller 11 may set, as the measurement position, any of various points included the calibration range with no limitations to the above-mentioned points.

The controller 11 obtains the recognition result of the mark 46 when the robot 40 has been moved to the measurement position. The controller 11 calculates, as a measurement result, the position of the robot 40 based on the recognition result of the mark 46. The controller 11 calculates a difference between an initial value of the measurement position and the measurement result. Since the robot 40 is moved to the measurement position based on the detection results of the sensors, the controller 11 may calculate a difference between the set measurement position and the measurement result without calculating the sensor-based position of the robot 40. The controller 11 may obtain the detection results of the sensors when the robot 40 has been moved to the measurement position, may calculate, as the measurement position, the sensor-based position of the robot 40 from those detection results, may set the calculated measurement position as the initial value of the measurement position, and may calculate the difference between the calculated initial value and the measurement result.

The controller 11 determines, based on the difference between the initial value of the measurement position and the measurement result, whether the relationship between the coordinate systems is to be corrected. For example, if the difference between the initial value of the measurement position and the measurement result is greater than a predetermined threshold, the controller 11 determines that the relationship between the coordinate systems is to be corrected. In the case of the controller 11 obtaining the measurement results in multiple measurement positions, if the difference between at least one of the initial values of the measurement positions and the measurement result in the measurement position of interest is greater than the predetermined threshold, the controller 11 determines that the relationship between the coordinate systems is to be corrected. If the difference between the initial value of the measurement position and the measurement result is equal to or smaller than the predetermined threshold, the controller 11 determines that the correction and the recalibration of the relationship between the coordinate systems is not required. The controller 11 may set the predetermined threshold as appropriate. In an example, the controller 11 may set the predetermined threshold based on the specifications of position accuracy during the operation of the robot 40.

In trying to correct the relationship between the coordinate systems, the controller 11 may correct the coordinate system of the space information acquisition unit 20 such that the coordinate system of the space information acquisition unit 20 agrees with the coordinate system of the robot 40. The controller 11 may correct the coordinate system of the robot 40 such that and the coordinate systems of the robot 40 agrees with the coordinate system of the space information acquisition unit 20.

In more detail, the controller 11 may perform the correction by rotating or translating the coordinate system of the space information acquisition unit 20 or the coordinate system of the robot 40. The controller 11 may perform the correction by increasing or decreasing a scale of the coordinate system of the space information acquisition unit 20 or the coordinate system of the robot 40. The controller 11 may correct a distortion of the coordinate system of the space information acquisition unit 20 or the coordinate system of the robot 40. The controller 11 may calculate a correction value of the measurement position based on the correction of the coordinate system.

The controller 11 may obtain the tip position and posture of the robot 40 in one measurement position and may correct not only a translation direction but also a rotation direction of the coordinate system based on information indicating a direction of the mark 46, for example, a rotation angle.

While the embodiments according to the present disclosure have been described with reference to the drawings and the examples, it is to be noted that those skilled in the art can variously vary or alter the embodiments on the basis of the present disclosure. Hence it is to be noted that those variations or alterations also fall within the scope of the present disclosure. For example, unless there is no theoretical contradiction, the functions included in various components and so on can be rearranged in such a manner as combining multiple components into one or dividing any of the components into multiple parts.

All the configuration requirements described in the present disclosure and/or all the methods or all the processing steps disclosed herein can be implemented in optional combinations expect for the case in which features to be combined are mutually exclusive. Furthermore, various features described in the present disclosure can be replaced with alternative features that are effective for the same purposes, equivalent purposes, or similar purposes unless explicitly denied. Accordingly, unless explicitly denied, the various features disclosed herein are merely examples of a series of the same or equivalent comprehensive features.

In addition, embodiments according to the present disclosure are not limited to any of the concrete configurations of the above-described embodiments. The embodiments according to the present disclosure can be expanded to all the novel features described in the present disclosure or combinations thereof, or to all the novel methods or processing steps described in the present disclosure or combinations thereof.

### REFERENCE SIGNS

- 1: robot control system
- 10: robot control device (11: controller, 12: storage)
- 20: space information acquisition unit
- 40: robot (42: arm, 44: end effector, 46: mark)
- 50: object
- 60: first calibration range
- 62: second calibration range

## Claims

1. A robot control device comprising a controller configured to control a robot,
wherein the controller
executes a first calibration of the robot in at least one first calibration position included in a first calibration range set in an operating space of the robot; and
executes a second calibration of the robot in at least one second calibration position that is included in a second calibration range defining part of the first calibration range and that is set with a higher density than the at least one first calibration position.

2. The robot control device according to claim 1, wherein the second calibration position is set, in a space in which the robot performs work, with a density that is determined based on accuracy of the work of the robot.

3. The robot control device according to claim 1 or 2, wherein the controller executes the first calibration and the second calibration based on a captured image of the operating space of the robot.

4. A robot control system comprising:
the robot control device according to any one of claims 1 to 3; and
the robot.

5. A robot control method comprising:
executing, by a controller configured to control a robot, a first calibration of the robot in at least one first calibration position included in a first calibration range set in an operating space of the robot; and
executing, by the controller, a second calibration of the robot in at least one second calibration position that is included in a second calibration range defining part of the first calibration range and that is set with a higher density than the at least one first calibration position.
